# EUROPEAN PATENT APPLICATION

(11) **EP 1 308 196 A1**
(43) Date of publication of application: **07.05.2003**
(21) Application number: 02024510.6
(22) Date of filing: 30.10.2002
(51) Int. Cl.: B01D 29/05, B01D 29/00, B41J 2/165

(54) **Integrated micromachined filter systems and methods**

(30) Priority: 30.10.2001 US 682895
(71) Applicant: Xerox Corporation, Rochester, New York 14644 (US)
(72) Inventor: Gulvin, Peter M., Webster, NY 14580 (US)
(74) Representative: Grünecker, Kinkeldey, Stockmair & Schwanhäusser Anwaltssozietät

(57) **Abstract**

A micromachined filter system comprises a micromachined filter (100) integrated in a micro-device (200). In various embodiments, the micromachined filter system is fabricated along with the micro-device (200) using the same or similar techniques. The micromachined filter (100) may comprise a polysilicon filter. According to the micromachined filter system, the micromachined filter (100) may be formed in one or more polysilicon layers of the micro-device. The micromachined filter may also comprise a polyimide filter. In various embodiments, the micromachined filter may be situated downstream of a fluid inlet of the micro-device. In various embodiments, a non-integrated, external pre-filter may be used in conjunction with an integrated micromachined filter.

## Description

### BACKGROUND OF THE INVENTION

### 1. Field of Invention

This present invention relates to micromachined filters, especially to micromachined filters integrated into a micromachined or microelectromechanical system (MEMS) based device.

### 2. Description of Related Art

Various micromachined or microelectromechanical system (MEMS) based devices have been developed. For example; micromachined fluid ejectors have been developed for ink jet recording or printing. Fluid ejectors for ink jet printing include one or more nozzles through which small ink droplets are ejected to print characters.

Fluid drop ejectors may be used not only for printing, but also for depositing photoresist and other liquids in the semiconductor and flat panel display industries, for delivering drug and biological samples, for delivering multiple chemicals for chemical reactions, for handling DNA sequences, for delivering drugs and biological materials for interaction studies and assaying, and for depositing thin and narrow layers of plastics for usable as permanent and/or removable gaskets in micro-machines.

In many applications, such as those described above, a filter may be used in conjunction with the micromachined device. In the case of fluid drop ejectors, it is desirable to filter the fluid that is to be ejected to reduce clogging of the fluid flow path and/or to reduce particulate contamination of the fluid. Current approaches attach pre-fabricated filters, such as polymide films with laser-ablated filter holes, to an inlet of the fluid drop ejector. Examples of non-integrated filters for ink jet applications are described in U.S. Patents Nos. 5,610,645 to Moore et al. and 5,971,531 to Dietl et al., each of which is incorporated herein by reference in its entirety. Regardless of the type of micromachined device, filtering typically requires a filter capable of filtering particulates on the same order of size as the device.

### SUMMARY OF THE INVENTION

This invention provides micromachined filter systems and methods that are integrated in a micromachined device.

The micromachined filter systems and methods of this invention provide reduced manufacturing complexity and/or cost.

The micromachined filter systems and methods of this invention separately provide a filter of high accuracy and/or uniformity.

The micromachined filter systems and methods of this invention separately provide a filter of polysilicon.

The micromachined filter systems and methods of this invention separately provide a filter of polyimide.

The micromachined filter systems and methods of this invention separately provide a filter formed in a polysilicon layer of a micromachined device.

The micromachined filter systems and methods of this invention separately provide a filter formed in a plurality of polysilicon layers of a micromachined device.

The micromachined filter systems and methods of this invention separately provide improved processing strength for a micromachined fluid ejector.

According to various embodiments of this invention, a micromachined filter is integrated in at least one micromachined layer of a micro-device. In various embodiments, a micromachined filter according to this invention is of polysilicon. For example, in various embodiments, a micromachined filter is micromachined in a polysilicon layer of a micromachined device. In other various embodiments, a micromachined filter, not necessarily of polysilicon, is integrated in a micro-device downstream of a fluid inlet of the micro-device.

In various embodiments, a micromachined filter according to this invention comprises a series of substantially parallel beams. In various embodiments, the micromachined filter comprises a first series of substantially parallel beams and a second series of substantially parallel beams. The first and second series of beams may be parallel and at least partially offset to one another. Alternatively, the first and second series of beams may be non-parallel to one another.

In other various embodiments, a micromachined filter according to this invention comprises a grid of intersecting beams and a plurality of holes separating the beams. In various embodiments, the micromachined filter comprises a first grid of intersecting beams and a first plurality of holes separating the beams formed in a first layer, and a second grid of intersecting beams and a second plurality of holes separating the beams formed in a second layer that is adjacent the first layer. The first and second grids are at least partially offset so that first and second pluralities of holes are at least partially offset.

According to various embodiments of a method of manufacturing according to this invention, a polysilicon layer is patterned with fine holes to fabricate a filter. In various embodiments, the fine holes are patterned using photolithography. In other embodiments, e-beam lithography is used to pattern extra fine holes.

According to various embodiments of a method of filtering fluid into a micro-device according to this invention, a fluid is passed through a fluid inlet of a micro-device and a filter that is integrated in the micro-device downstream of the fluid inlet. In various embodiments, the fluid is also passed through a pre-filter that is upstream of the fluid inlet.

In various embodiments, the systems and methods of this invention provide filtration of particulates as small as 10 microns. In other embodiments, the systems and methods of this invention provide filtration of particulates as small as 2 microns, or even as small as 0.2 microns. In still other embodiments, the systems and methods of this invention provide filtration of nano-scale particulates.

These and other features and advantages of this invention are described in, or are apparent from, the following detailed description of various exemplary embodiments of the systems and methods according to this invention.

### BRIEF DESCRIPTION OF THE DRAWINGS

Various exemplary embodiments of the systems and methods of this invention are described in detail below, with reference to the attached drawing figures, in which:

Fig. 1 is a plan view of a first exemplary embodiment of a micromachined filter according to this invention;

Fig. 2 is a cross-sectional view of the exemplary micromachined filter of Fig. 1 integrated in a fluid ejector;

Fig. 3 is a plan view of a second exemplary embodiment of a micromachined filter according to this invention;

Fig. 4 is a cross-sectional view of the exemplary micromachined filter of Fig. 3 integrated in a fluid ejector;

Fig. 5 is a cross-sectional view of a third exemplary embodiment of a micromachined filter according to this invention;

Fig. 6 is a cross-sectional view of a fourth exemplary embodiment of a micromachined filter according to this invention; and

Fig. 7 is a cross-sectional view of a fifth exemplary embodiment of a micromachined filter according to this invention.

### DETAILED DESCRIPTION OF EXEMPLARY EMBODIMENTS

A micromachined filter according to various embodiments of this invention comprises a first plurality of substantially parallel beams and a second plurality of substantially parallel beams that intersect the first beams to form a grid. The first and second beams may be created by patterning and etching a plurality of holes in one or more layers of polysilicon. In various embodiments, a single plurality of substantially parallel beams is used to form the filter.

In various embodiments, the holes are formed using photolithography to provide very accurate and uniform results for the micromachined filter. For example, current standard photolithographic techniques may be used such that the micromachined filter is capable of filtering particulates as small as about 2 microns. Submicron and even nano-scale filtration by the filters of this invention may also be achieved depending on the fabrication technique employed.

The micromachined filter may be fabricated in multiple layers. In various embodiments, the first beams and the second beams are formed in separate layers so that they do not actually intersect. Still, a similar result is achieved by making the first and second beams non-parallel to each other, for example, extending in perpendicular directions.

The micromachined filter systems according to this invention comprise a micromachined filter integrated in a micro-device. The integration in a micro-device allows the micromachined filter systems to be fabricated along with the micro-device using the same or similar techniques. For example, in various embodiments, a micromachined filter system comprises a polysilicon filter formed in one or more polysilicon layers of the micro-device. In other various embodiments, a micromachined filter system comprises a polyimide filter formed in the micro-device. Thus, the micromachined filter systems of this invention may be fabricated using any known or hereafter developed fabrication technique suitable for fabricating micro-devices.

Further, since a micromachined filter according to this invention is integrated in a micro-device, the micromachined filter may be situated downstream of a fluid inlet of the micro-device. This allows filtering of particulates that may originate in the fluid after the fluid has entered the fluid inlet of the micro-device. As noted above, existing technology involves filtering of the fluid prior to entry of the fluid into the micro-device using non-integrated, external filters. Thus, any particulates generated within the micro-device cannot be filtered out. In various embodiments, a non-integrated, external pre-filter may be used in conjunction with an integrated micromachined filter. Also, in various embodiments, multiple integrated micromachined filters may be used to successively filter smaller and smaller particulates.

The systems and methods of this invention provide reduced manufacturing complexity and/or cost by minimizing additional manufacturing, assembly or attachment for a filter of a micro-device. For example, since the same patterning and etching steps that may be used to define features of the micro-device may be used to create the polysilicon filter, additional mask layers are not needed.

By using surface accurate micromachining techniques, such as photolithography, the systems and methods of this invention provide a filter of high accuracy and/or uniformity. Thus, a filter of exacting specifications may be provided for a given application. According to the systems and methods of this invention, filtration of particulates as small as 10 microns, 2 microns or even submicron or nano-scale filtration may be achieved in various embodiments. The micromachining techniques that may be employed with this invention are not limited to those described herein, but rather include any known or hereafter developed technique that is capable of forming a micro-filter.

While exemplary embodiments of this invention are described herein with reference to a micromachined fluid ejector, it should be understood that the micromachined filter systems and methods of this invention are suitable for integration into any known or hereafter developed micro-device that requires filtration.

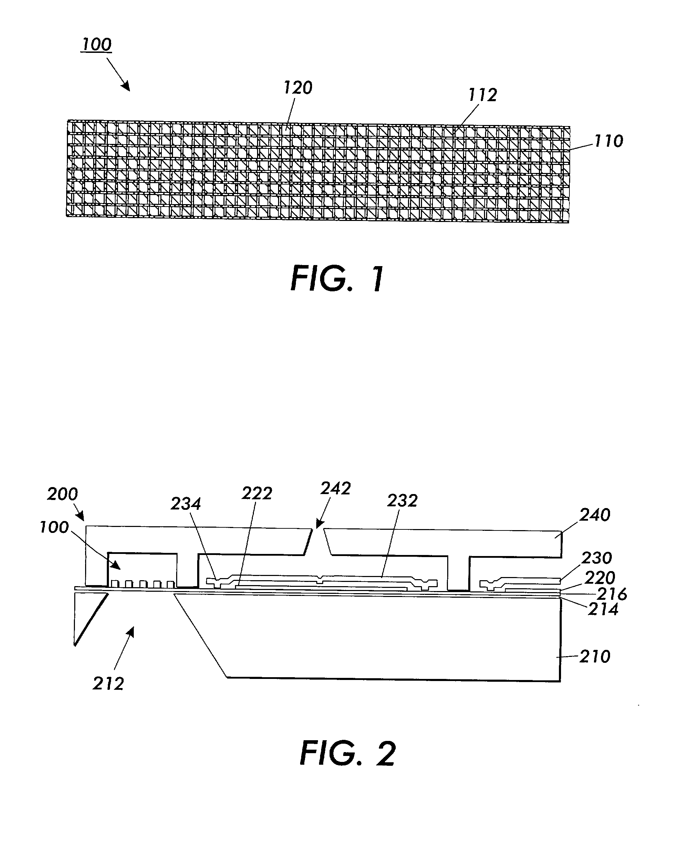

Fig. 1 shows a plan view of a first exemplary embodiment of a micromachined filter 100 according to this invention. In this embodiment, the micromachined filter 100 is made of polysilicon so that the micromachined filter 100 may be readily integrated in a micro-device, such as a micromachined fluid ejector 200, as shown in Fig. 2. The micromachined filter 100 may be made of other suitable materials as well, such as, for example silicon nitride, silicon carbide, silicon dioxide, single crystalline silicon, polyimide, SU-8, aluminum or gold

In the first exemplary embodiment, the micromachined filter 100 comprises a first plurality of substantially parallel beams 110 and a second plurality of substantially parallel beams 112 that intersect the first beams 110 to form a grid. The first and second beams 110, 112 may be created by patterning and etching a plurality of holes 120 in one or more layers of polysilicon. Using photolithography to form the holes 120 provides very accurate and uniform results for the micromachined filter 100. The only constraint on the size of particulates that may be filtered out by the micromachined filter 100 is any limitations or design rules of the process used to fabricate the micromachined filter 100. For example, when the micromachined filter 100 is fabricated in a layer of polysilicon, current standard photolithographic techniques may be used such that the micromachined filter 100 is capable of filtering particulates as small as about 2 microns. Submicron, as small as about 0.2 microns, filters may also be fabricated using current technology such as, for example, using a deep-UV stepper for lithography.

Further, the holes 120 may be formed on a nanometer scale. For example, e-beam lithography may be used to pattern nano-scale holes. Shorter etch times for structural layers and very good selectivity between layers may be used to facilitate the fabrication of smaller scale holes.

While the first embodiment includes intersecting beams 110, 112 that form a grid, only a single plurality of substantially parallel beams may be used. In such a case, however, the micromachined filter 100 will only filter out particulates that do not have at least one dimension smaller than a gap between the beams. The approach using the intersecting beams 110, 112 will filter out particulates that do not have at least two dimensions smaller than a width of the holes 120. Further, while the intersecting beams are shown intersecting at right angles, any desired angle may be selected.

When the micromachined filter 100 is fabricated in multiple layers, the first beams 110 and the second beams 112 may be formed in separate layers so that they do not actually intersect. Still, a similar result may be achieved by making the first and second beams 110 and 112 non-parallel to each other, for example, extending in perpendicular directions.

While the holes 120 may be formed using photolithographic techniques, any suitable known or hereafter developed micromachining technique may be used. For example, the micromachining technique may be selected to match the technique used to fabricate the overall micro-device or to match the material(s) used to fabricate the filter and/or the micro-device.

For example, the micro-devices in which the micromachined filters of this invention are integrated may be fabricated using the SUMMiT processes or other suitable micromachining processes. The SUMMiT processeh are covered by various U.S. patents belonging to Sandia National Labs, including U.S. Patents 5,783,340; 5,798,283; 5,804,084; 5,919,548; 5,963,788; and 6,053,208, each of which is incorporated herein by reference in its entirety. The SUMMiT processes are primarily covered by the '084 and '208 patents. In particular, the methods discussed in copending U.S. Patent Application 09/723,243, filed herewith and incorporated herein by reference in its entirety, may be used.

Polysilicon surface micromachining processes, such as the Multi-User Microelectromechanical System (MUMPS) process by Cronos Integrated Microsystems, are also suitable for this invention. The MUMPS process is a standard 3-layer polysilicon surface micromachining process. Another process involving surface micromachining on top of a silicon-on-insulator (SOI) wafer may also be used. This process is described in copending U.S. Patent Application Nos. [Attorney Docket Nos. D/98777, D/98777Q and D/98777Q1], incorporated herein by reference in their entirety.

As shown in Fig. 2, the micromachined filter 100 is integrated in the exemplary micromachined fluid ejector 200. The exemplary micromachined fluid ejector 200 comprises a silicon substrate 210, a plurality of layers of polysilicon (220 and 230) and a polyimide layer 240.

During an exemplary manufacturing process, an oxide layer 214 is formed on the silicon substrate 210. Over the oxide layer 214, a silicon nitride layer 216 is deposited and then patterned and etched as needed. A first polysilicon layer 220 is deposited over the silicon nitride layer 216 and then patterned and etched to form the micromachined filter 100 and other structures such as, for example, an electrode 222. In a known manner, a sacrificial layer (not shown), such as silicon dioxide, is deposited, patterned and etched to define features of the micromachined fluid ejector 200. A second polysilicon layer 230 is deposited over the etched sacrificial layer and then patterned and etched to form other structures such as, for example, an ejector plate 232 and springs 234.

It should be understood that the micromachined filter 100 may be formed in any of the polysilicon layers of the fluid ejector 200, or in any combination of the polysilicon layers. For example, silicon dioxide may be encased between two layers of polysilicon so that the silicon dioxide is not etched away during a release etch. The silicon dioxide provides additional stiffness during further processing.

As shown, a fluid inlet 212 is etched in the silicon substrate 210 using known techniques to allow a fluid to enter the ejector 200. For example, a backside of the silicon substrate 210 may be patterned with nitride and oxide layers and subjected to a potassium hydroxide (KOH) etch. The nitride and oxide layers may be removed from the backside of the silicon substrate 210 using hydrofluoric acid. However, according to the exemplary manufacturing process, the oxide layer 214 and the nitride layer 216 are left in place over the fluid inlet 212/under the filter 100 to prevent spun-on resist and polyimide for falling through the fluid inlet 212 during subsequent steps. Alternatively, the fluid inlet 212 may be etched using reactive ion etching or deep reactive ion etching, using a masking layer suitable for the reactive ion chemistry,

A thick sacrificial photoresist layer (not shown) is spun on, patterned and etched, for example, to form holes into which the polyimide layer 240 will flow. The polyimide layer 240 is spun on, patterned and etched. For example, a nozzle hole 242 may be etched in the polyimide layer 240 using known techniques to allow a fluid to be ejected from the ejector 200. Once the ejector 200 is complete except for packaging, the oxide layer 214 and the nitride layer 216 left in place over the fluid inlet 212/under the filter 100 are removed.

As shown in Fig. 2, a pre-filter 250 may be added to the micromachined fluid ejector 200 upstream of the ink inlet 212. The pre-filter 250 can provide filtration of the ink prior to reaching the filter 100 so that larger particles or particulates that might otherwise clog the filter 100 may be removed from the ink. Because the pre-filter 250 is located upstream of the ink inlet 212, the pre-filter 250 is more accessible that the filter 100 for any unclogging that may be needed. The pre-filter 250 may be fabricated using any suitable technique and of any suitable material and may be, for example, attached to the silicon substrate 210 by any suitable adhesive.

Another exemplary method for obtaining the structure shown in Fig. 2 involves laser ablation. A solid film or layer of polyimide, SU-8, or other suitable material is patterned by shining or flashing intense laser light through a photomask. Partial or full-depth holes are thus carved out to define the holes of the filter 100 shown in Fig. 2. A series of masks may be used to define areas of different depths. The laser-ablated film forming the filter 100 is then bonded to the silicon substrate 210 using any suitable adhesive.

In addition to the advantages noted above, integrating the micromachined filter 100 in the ejector 200 as shown in Fig. 2 provides added strength to the thin membrane of the oxide layer 214 and the nitride layer 216 left in place over the fluid inlet 212. The oxide layer 214 and the nitride layer 216 remain in place during fabrication of the ejector 200 and are removed at the end of the process. If the oxide layer 214 and the nitride layer 216 are removed prematurely, spinning photoresist onto the wafer would be difficult because the photoresist would fall into the holes and through the wafer.

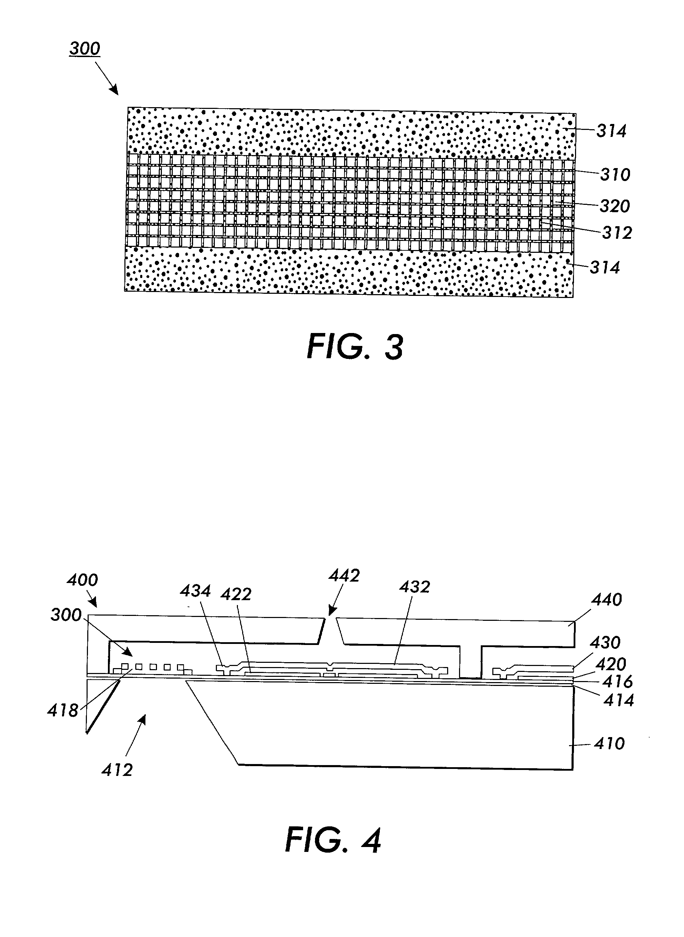

Fig. 3 shows a plan view of a second exemplary embodiment of micromachined filter 300 according to this invention. In this embodiment, the micromachined filter 300 is made of polysilicon so that the micromachined filter 300 may be readily integrated in a micro-device, such as a micromachined fluid ejector 400, as shown in Fig. 4. As noted above with respect to the first embodiment, the micromachined filter 300 also may be made of any other suitable material.

In the second exemplary embodiment, the micromachined filter 300 comprises a first plurality of substantially parallel beams 310 and a second plurality of substantially parallel beams 312 that intersect the first beams 310 to form a grid. The grid formed by the first and second beams 310, 312 is supported on each side by a solid edge 314. As with the first exemplary embodiment, the first and second beams 310, 312 may be created by patterning and etching a plurality of holes 320 in one or more layers of polysilicon.

As shown in Fig. 4, the micromachined filter 300 is integrated in the exemplary micromachined fluid ejector 400. The exemplary micromachined fluid ejector 400 comprises a silicon substrate 410, a plurality of layers of polysilicon (420 and 430) and a polyimide layer 440. The ejector 400 may also comprise a pre-filter 450, as described above with respect to the first exemplary embodiment.

During an exemplary manufacturing process similar to that described above with respect to the first embodiment, an oxide layer 414 is formed on the silicon substrate 410. Over the oxide layer 414, a silicon nitride layer 416 is deposited and then patterned and etched as needed. The use of both the oxide layer 414 and the nitride layer 416 provides additional protection from the backside potassium hydroxide (KOH) etch described above. Further, this allows devices situated on the front side of the silicon substrate 410 to operate at higher voltages without breakdown. The oxide layer 414 and the nitride layer 416 may be patterned independently so that the oxide layer 414-may be removed in a ring around the ink inlet 412. This prevents the potassium hydroxide (KOH) etch from etching sideways through the oxide layer 414 so as to undercut the nitride layer 416 and enlarge the hole for the ink inlet 212.

For the second exemplary embodiment, a second oxide layer 418 is deposited and then patterned and etched to remain over an area under which a fluid inlet 412 and over which the micromachined filter 300 are to be formed.

A first polysilicon layer 420 is deposited over the silicon nitride layer 416 and then patterned and etched to form the micromachined filter 300 and other structures such as, for example, an electrode 422. The second oxide layer 418 helps to avoid selectivity concerns with the etch used to form the holes 320 in the micromachined filter 300. Since the solid edge 314 is not etched, the micromachined filter 300 is formed by etching the holes 320 only in areas of the first polysilicon layer 420 that have the second oxide layer 418 underneath, rather than a nitride layer that exhibits poor selectivity for the polysilicon etch.

As described above with respect to the first embodiment, a sacrificial layer (not shown), such as silicon dioxide, is deposited, patterned and etched to define features of the micromachined fluid ejector 400 a second polysilicon layer 430 is deposited over the etched sacrificial layer and then patterned and etched to form other structures such as, for example, an ejector plate 432 and springs 434. Then, the fluid inlet 412 is etched in the silicon substrate 410 leaving the oxide layer 414, the nitride layer 416 and the second oxide layer 418 in place over the fluid inlet 412/under the filter 300 to prevent spun-on resist and polyimide from falling through the fluid inlet 412 during subsequent steps.

A thick photoresist layer (not shown) is spun on, patterned and etched, for example, to form holes into which the polyimide layer 440 will flow. The polyimide layer 440 is spun on, patterned and etched. For example, a nozzle hole 442 may be etched in the polyimide layer 440 using known techniques to allow a fluid to be ejected from the ejector 400. Once the ejector 400 is complete except for packaging, the oxide layer 414, the nitride layer 416 and the second oxide layer 418 left in place over the fluid inlet 412/under the filter 300 are removed.

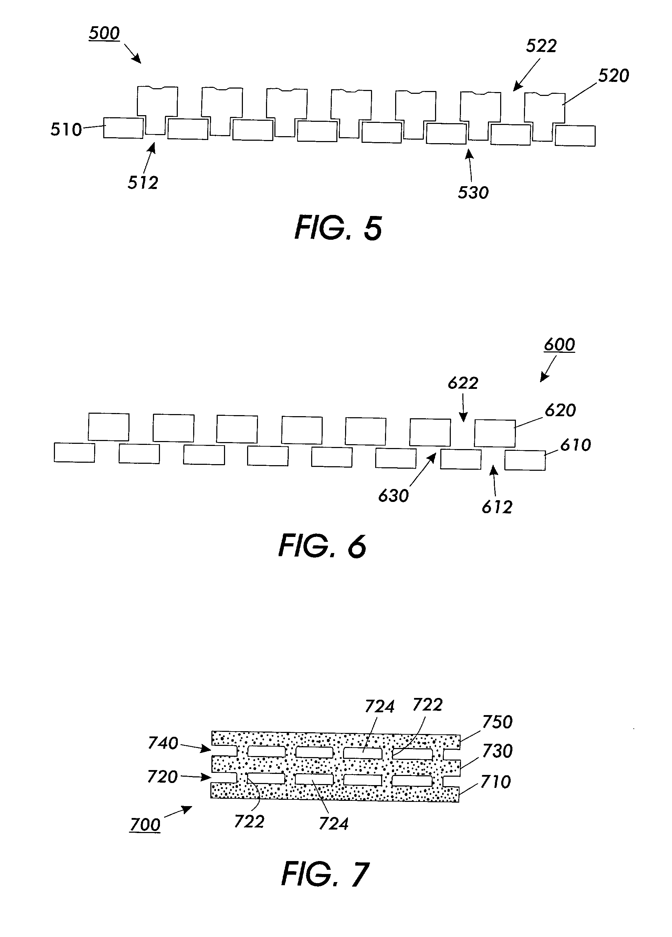

Fig. 5 shows a cross-sectional view of a third exemplary embodiment of micromachined filter 500 according to this invention. In this embodiment, the - micromachined filter 500 is-made of polysilicon so that the micromachined filter 500 may be readily integrated in a micro-device. As noted above, the micromachined filter 500 may be made of other suitable materials as well.

In the third exemplary embodiment, the micromachined filter 500 comprises a first polysilicon layer 510 and a second polysilicon layer 520 formed over the first polysilicon layer 510. Each of the first and second polysilicon layers 510, 520 may comprise either a series of substantially parallel beams or a first plurality of substantially parallel beams and a second plurality of substantially parallel beams that intersect the first beams to form a grid. The beams of the first polysilicon layer 510 and the beams of the second polysilicon layer 520 may be created by patterning and etching a plurality of holes 512 and 522 in the respective layer of polysilicon. As shown, the holes 512 and 522 are offset so that the beams of the first polysilicon layer 510 align with the holes 522 of the second polysilicon layer 520 and the beams of the second polysilicon layer 520 align with the holes 512 of the first polysilicon layer 510.

According to an exemplary manufacturing process, after the first polysilicon layer 510 has been patterned and etched to form the holes 512, a sacrificial oxide layer, represented by the space between the first and second polysilicon layers 510 and 520, is deposited. Since the sacrificial oxide layer is conformal, the second polysilicon layer 520 will extend partially into the holes 512 of the first polysilicon layer 510.

Once the sacrificial oxide layer is removed, a gap 530 remains between the first and second polysilicon layers 510 and 520. The size of the gap 530 determines the size of particulates that will be filtered out of a fluid passed through the micromachined filter 500. Thus, the only constraint on the size of particulates that may be filtered out by the micromachined filter 500 is any limitation on the thickness of the sacrificial oxide layer that may be formed. For example, current techniques allow deposition of a layer of oxide of about 0.2 microns thick so that the micromachined filter 500 is capable of filtering particulates as small as about 0.2 microns. Although other techniques may be used to achieve a nano-scale filter, the layer of oxide must be able to withstand etching of the polysilicon layer above the layer of oxide. Thus, a thinner polysilicon layer and improved selectivity between layers will allow fabrication of a finer filter.

Fig. 6 shows a cross-sectional view of a fourth exemplary embodiment of micromachined filter 600-according to this invention. In this embodiment, the micromachined filter 600 is made of polysilicon so that the micromachined filter 600 may be readily integrated in a micro-device. As noted above, the micromachined filter 600 may be made of other suitable materials as well.

As with the third exemplary embodiment, the micromachined filter 600 comprises a first polysilicon layer 610 and a second polysilicon layer 620 formed over the first polysilicon layer 610. Each of the first and second polysilicon layers 610, 620 may comprise either a series of substantially parallel beams or a first plurality of substantially parallel beams and a second plurality of substantially parallel beams that intersect the first beams to form a grid. The beams of the first polysilicon layer 610 and the beams of the second polysilicon layer 620 may be created by patterning and etching a plurality of holes 612 and 622 in the respective layer of polysilicon. As shown, the holes 612 and 622 are offset so that the beams of the first polysilicon layer 610 align with the holes 622 of the second polysilicon layer 620 and the beams of the second polysilicon layer 620 align with the holes 612 of the first polysilicon layer 610.

According to an exemplary manufacturing process, after the first polysilicon layer 610 has been patterned and etched to form the holes 612, a relatively thick sacrificial oxide layer (not shown) is deposited. The sacrificial oxide layer is then planarized, for example, by chemical mechanical polishing (CMP), to achieve a desired thickness over a top side of the beams of the first polysilicon layer 610. The planarized sacrificial oxide layer, represented by the space between the first and second polysilicon layers 610 and 620, prevents the second polysilicon layer 620 from extending into the holes 612 of the first polysilicon layer 610.

Once the sacrificial oxide layer is removed, a gap 630 remains between the first and second polysilicon layers 610 and 620. When the holes 612 and 622 are offset so that the beams of the first polysilicon layer 610 align with the holes 622 of the second polysilicon layer 620 and the beams of the second polysilicon layer 620 align with the holes 612 of the first polysilicon layer 610, as shown, the size of the gap 630 determines the size of particulates that will be filtered out of a fluid passed through the micromachined filter 600. However, in this embodiment, the holes 622 of the second polysilicon layer 620 may be only partially offset to allow larger particulates to pass through the micromachined filter 600.

Fig. 7 shows a cross-sectional view of a fifth exemplary embodiment of micromachined filter 700 according to this invention. In this embodiment, the micromachined filter 700 comprises a plurality of stacked layers that filter fluid that generally flows in a direction substantially parallel to the layers, as opposed to transversely through the layers as in the previous exemplary embodiments. In this embodiment, the micromachined filter 700 is made of polysilicon so that the micromachined filter 700 may be readily integrated in a micro-device. As noted above, the micromachined filter 700 may be made of other suitable materials as well.

In the fifth exemplary embodiment, the micromachined filter 700 comprises a first polysilicon layer 710, a second polysilicon layer 720 formed ever the first polysilicon layer 710 and a third polysilicon layer 730 formed over the second polysilicon layer 740. Each of the first and third polysilicon layers 710 and 730 may comprise a solid layer of polysilicon to support the second polysilicon layer 720 therebetween. It should be understood, however, that the first and third polysilicon layers 710 and 730 are optional since the second polysilicon layer 720 may be supported by the substrate or other structural layers of the micro-device.

The second and fourth polysilicon layers 720 and 740 form narrow channels or passageways for the fluid. The passageways may be formed by gaps 724 in the second and fourth polysilicon layers 720 and 740 or between adjacent layers. The size of particles filtered out by the micromachined filter 700 will depend on the size of the gaps 724.

The second and fourth polysilicon layers 720 and 740 may comprise a plurality of columns 722. The columns 722 may be substantially parallel to each other, or may be offset with respect to each other, to define the gaps 724 therebetween. Also, the columns 722 may extend over the length of the micromachined filter 700 to form substantially parallel walls.

The design of the second and fourth polysilicon layers 720 and 740 may be created by patterning a sacrificial layer to define holes into which the polysilicon layer will be deposited to form the columns 722. According to an exemplary manufacturing process, after the first polysilicon layer 710 has been formed, a sacrificial oxide layer, represented by the space between the first and third polysilicon layers 710 and 730, is deposited. The sacrificial oxide layer is patterned to form holes therethrough as desired. Then, the second polysilicon layer 720 is formed over the patterned sacrificial oxide layer to fill in the holes. The third polysilicon layer 730 is then formed over the second polysilicon layer 720 and the upper surface of the sacrificial oxide layer. It will be understood that the third polysilicon layer 730 may be formed in a single step by forming the second polysilicon layer 720 so as to cover the upper surface of the sacrificial oxide layer.

Once the sacrificial oxide layer is removed, gaps 724 remain between the columns 722 of the second polysilicon layer 720. Such a process may be repeated for as many layers as are desired to form the micromachined filter 700. As shown in Fig. 7, the micromachined filter 700 may comprise the additional polysilicon layers 740 and 750 which are formed as described above. By forming the micromachined filter 700 with multiple patterned layers of polysilicon 720 and 740, the micromachined filter 700 can accommodate a larger flow of fluid while maintaining a desired degree of filtration.

The design of the second and fourth polysilicon layers 720 and 740 may also be created by patterning the polysilicon layers 720 and 740 to define the gaps 724. According to an exemplary manufacturing process, after the first polysilicon layer 710 has been formed, the second polysilicon layer 720 is deposited and patterned to form holes therethrough as desired. Then, a sacrificial layer is deposited over the second polysilicon layer 720 either to fill in the holes or to conform to the surfaces of the second polysilicon layer 720 and the exposed surface of the first polysilicon layer 710. The third polysilicon layer 730 may then be deposited to obtain structures similar to those illustrated in Figs. 5 and 6 for the micromachined filter 700. In this embodiment, however, the third polysilicon layer 730 is not patterned so that the fluid flow is substantially parallel to the layers. When the sacrificial oxide layer is conformal, the size of the particles filtered by the micromachined filter 700 is determined only by the thickness of the sacrificial oxide layer since that will determine the size of the gaps 724.

It should be understood that a micromachined filter comprising a plurality of stacked layers that filter fluid that generally flows in a direction substantially parallel to the layers may be achieved in various other configurations. The particular processing steps necessary to obtain a particular design will vary depending on the configuration. As such, the above description is not intended to be limiting, but merely illustrative of a micromachined filter according to this invention.

For example, the first polysilicon layer 710 may have a passageway (not shown) formed therethrough that is in communication with at least one of the gaps 724 to allow the micromachined filter 700 to be fabricated over the fluid inlet, as illustrated in Figs. 2 and 4. The passageway through the first polysilicon layer 710 may or may not itself filter the fluid.

Further, it should be understood that the individual features of the various exemplary embodiments may be included or excluded as desired for a given application. As such, all possible combinations of the described features are considered. to be encompassed by the present invention.

Thus, while this invention has been described in conjunction with the exemplary embodiments outlined above, it is evident that many alternatives, modifications and variations will be apparent to those skilled in the art. Accordingly, the exemplary embodiments of the invention, as set forth above, are intended to be illustrative, not limiting. Various changes may be made without departing from the spirit and scope of the invention.

## Claims

1. A micromachined filter system, comprising:
a micro-device having a plurality of micromachined layers formed over a substrate; and
a micromachined filter integrated in at least one of the micromachined layers.

2. The system of claim 1, wherein the at least one of the micromachined layers is a micromachined polysilicon layer.

3. The system of claim 1, wherein the micro-device comprises a plurality of micromachined layers, and wherein the micromachined filter is integrated in at least two of the plurality of micromachined layers.

4. The system of claim 3, wherein the micromachined filter comprises:
a first grid of intersecting beams and a first plurality of holes separating the beams formed in a first micromachined layer; and
a second grid of intersecting beams and a second plurality of holes separating the beams formed in a second micromachined layer that is adjacent the first micromachined layer, the first and second grids being at least partially offset so that first and second pluralities of holes are at least partially offset.

5. A micromachined filter system, comprising:
a micro-device having a plurality of micromachined layers formed over a substrate and a fluid inlet; and
a micromachined filter integrated in the micro-device downstream of the fluid inlet.

6. A filter comprising a micromachined layer of polysilicon.

7. A method of filtering a fluid flowing into a micro-device, comprising:
passing a fluid through a fluid inlet of a micro-device; and
passing the fluid through a filter that is integrated in the micro-device downstream of the fluid inlet.

8. A method of manufacturing a micro-device having an integrated filter, comprising:
forming a substrate;
forming a layer of sacrificial material over the substrate;
patterning the layer of sacrificial material;
forming a layer of structural material over the layer of sacrificial material; and
removing the layer of sacrificial material.

9. The method of claim 8, further comprising patterning the layer of structural material to form a plurality of holes through the layer of structural material prior to removing the layer of sacrificial material.

10. The method of claim 8, further comprising forming-a subsequent layer of sacrificial material over the substrate;
patterning the subsequent layer of sacrificial material;
forming a subsequent layer of structural material over the subsequent layer of sacrificial material, prior to removing the layers of sacrificial material.
